# EUROPÄISCHE PATENTSCHRIFT

(11) **EP 4 098 515 B1**
(45) Veröffentlichungstag und Bekanntmachung des Hinweises auf die Patenterteilung: **06.08.2025**
(21) Anmeldenummer: 22169693.3
(22) Anmeldetag: 25.04.2022
(51) Int. Cl.: B62D 1/181

(54) **LENKSÄULE MIT ELEKTROMOTOR UND SENSOREINRICHTUNG**
STEERING COLUMN WITH ELECTRIC MOTOR AND SENSOR DEVICE
COLONNE DE DIRECTION POURVUE DE MOTEUR ÉLECTRIQUE ET DISPOSITIF CAPTEUR

(30) Priorität: 31.05.2021 DE 102021205534
(43) Veröffentlichungstag der Anmeldung: 07.12.2022
(73) Patentinhaber: thyssenkrupp Presta Aktiengesellschaft, 9492 Eschen (LI); thyssenkrupp AG, 45143 Essen (DE)
(72) Erfinder: Kreutz, Daniel, 6800 Feldkirch (AT); Riedmann, Patrick, 6850 Dornbirn (AT); Willi, Andreas, 6923 Lauterach (AT)
(74) Vertreter: thyssenkrupp Intellectual Property GmbH

(56) Entgegenhaltungen:
- DE-A1- 102015 216 616
- DE-A1- 102016 212 140
- DE-B3- 19 861 266
- DE-U1- 202015 009 335
- JP-A- H1 170 880
- US-A1- 2004 144 192

## Beschreibung

Die Erfindung betrifft eine Lenksäule für ein Kraftfahrzeug, die eine Trageinheit, eine an der Trageinheit verstellbar gehalterte Stelleinheit und eine Verstelleinrichtung mit einem Elektromotor umfasst, wobei die Verstelleinrichtung zum Verstellen der Stelleinheit gegenüber der Trageinheit ausgebildet ist.

Im Stand der Technik sind solche Lenksäulen bekannt. Diese können dabei ausgebildet sein, die Stelleinheit mittels der Verstelleinrichtung in Längsrichtung und/oder in der Höhe bezüglich der Trageinheit zu verstellen, insbesondere um eine für einen Fahrzeugführer angepasste Bedienposition einer an der Lenksäule angeordneten Lenkhandhabe zur ermöglichen. Darüber hinaus ist es im Hinblick auf ein autonomes Fahren eines Kraftfahrzeugs bekannt, die Stelleinheit gegenüber der Trageinheit von einer Bedienposition, in welcher ein Kraftfahrzeugführer das Kraftfahrzeug manuell steuern kann, in eine Verstauposition, in welcher das Kraftfahrzeug ohne Lenkeingriffe des Kraftfahrzeugführers automatisch gelenkt wird, zu verbringen und umgekehrt. Um die Position der Stelleinheit der Lenksäule dabei genau bestimmen zu können, insbesondere im Hinblick auf eine optimale Ansteuerung von Kraftfahrzeugrückhaltesystemen, offenbart die DE 10 2019 108 466 A1 eine Lenksäule mit einer Positionserkennungsvorrichtung. Nachteilig dabei sind der vergleichsweise aufwendige Aufbau und die hohe Anzahl an Bauteilen.

Des Weiteren offenbart die US 2004/144192 A1 eine längs- und höhenverstellbare Lenksäule für ein Kraftfahrzeug. Die Verstellbarkeit der Lenksäule erfolgt dabei mittels Elektromotoren, wobei über die Umdrehungen der Motorwelle die Position des Lenkrades bestimmt wird. Hierzu wird eine Sensoranordnung offenbart, wobei ein scheibenförmiger magnetischer Impulsgeber, der zusammen mit der Motorwelle rotiert, mit einem magnetischen Sensor zusammenwirkt, um die Position zu erfassen.

Zudem ist aus der DE 198 61 266 B3 ein Verfahren zur Steuerung und Regelung motorisch angetriebener Verstelleinrichtungen in Kraftfahrzeugen bekannt. Demnach kann eine Antriebswelle mit einem Multipolmagneten ausgerüstet sein, wobei die Drehzahl der Antriebswelle durch Hallsensoren, die der Magnetscheibe zugeordnet sind, bestimmt werden kann.

Vor diesem Hintergrund ist es eine Aufgabe der vorliegenden Erfindung, eine verbesserte Lenksäule bereitzustellen, die vorteilhafterweise den Betrieb des Elektromotors der Verstelleinheit erfasst und darüber unter anderem eine einfache und kostengünstige Positionsbestimmung ermöglicht, insbesondere bei hoher Genauigkeit.

Zur Lösung dieser Aufgabe wird eine Lenksäule gemäß Anspruch 1 vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht eine Lenksäule für ein Kraftfahrzeug vor, die eine Trageinheit, eine an der Trageinheit verstellbar gehalterte Stelleinheit und eine Verstelleinrichtung mit einem Elektromotor oder mehr als einem Elektromotor umfasst, wobei die Verstelleinrichtung zum Verstellen der Stelleinheit gegenüber der Trageinheit ausgebildet ist. Der Elektromotor der Verstelleinrichtung weist dabei eine Motorwelle und eine Sensoreinrichtung auf. Die Sensoreinrichtung umfasst ein erstes Sensorelement und ein zweites Sensorelement, die jeweils ausgebildet und angeordnet sind, ein sich beim Rotieren der Motorwelle veränderndes Magnetfeld zu erfassen, wobei das erste Sensorelement und das zweite Sensorelement unterschiedlich in Bezug auf den Elektromotor ausgerichtet sind. Aus der Veränderung des erfassten Magnetfeldes kann dabei vorteilhafterweise eine Umdrehung der Motorwelle ermittelt werden. Damit können das erste Sensorelement und das zweite Sensorelement einerseits Informationen für ein Ansteuern des Elektromotors liefern. Darüber hinaus lässt sich vorteilhafterweise durch Auswerten des von dem ersten Sensorelement bereitgestellten ersten Signals und des von dem zweiten Sensorelement bereitgestellten zweiten Signals indirekt die Position der Stelleinheit relativ zu der Trageinheit bestimmen. Denn die jeweils äußersten Positionen, die die Stelleinheit einnehmen kann, liegen jeweils eine eindeutig definierte Anzahl von Umdrehungen der Motorwelle auseinander. Durch die unterschiedliche Ausrichtung des ersten Sensorelements und des zweiten Sensorelements kann das Magnetfeld dabei vorteilhafterweise in einer ersten Richtung und einer zweiten Richtung ermittelt werden, wobei hierdurch vorteilhafterweise die Messgenauigkeit erhöht wird. Darüber hinaus lässt sich vorteilhafterweise zuverlässig die Drehrichtung bestimmen.

Vorteilhafterweise sind das erste Sensorelement und das zweite Sensorelement in einer gemeinsamen Ebene angeordnet. Die gemeinsame Ebene ist insbesondere eine gemeinsame geometrische Ebene. Insbesondere ist vorgesehen, dass das erste Sensorelement und das zweite Sensorelement auf einer gemeinsamen Leiterplatte angeordnet. Hierdurch ist vorteilhafterweise der Aufbau vereinfacht.

Insbesondere erstreckt sich die Motorwelle des Elektromotors entlang einer Motorwellenachse, wobei die Ebene, in der das erste Sensorelement und das zweite Sensorelement vorteilhafterweise angeordnet sind, senkrecht zu der Motorwellenachse ist. Hierdurch ist eine besonders vorteilhafte Ausrichtung der Sensorelemente zur Erfassung des Magnetfelds beziehungsweise der magnetischen Flussdichte ermöglicht.

Gemäß einer besonders vorteilhaften Ausführungsform der Erfindung sind das erste Sensorelement und das zweite Sensorelement um einen Winkel in einem Winkelbereich zwischen 80° und 100° versetzt zueinander ausgerichtet. Besonders vorteilhaft ist, wenn das erste Sensorelement und das zweite Sensorelement um einen Winkel von 90° versetzt zueinander ausgerichtet sind, insbesondere versetzt bezüglich der Motorwellenachse. Eine solche Ausrichtung ist vorteilhaft im Hinblick auf die Messgenauigkeit. Weiter ist die Ausrichtung vorteilhaft im Hinblick auf eine Bestimmung der Drehrichtung der Motorwelle.

Bei einer weiteren vorteilhaften Ausgestaltung der Erfindung ist das erste Sensorelement weiter ausgebildet, ein erstes Signal bezüglich einer erfassten magnetischen Flussdichte bereitzustellen. Weiter ist das zweite Sensorelement vorteilhafterweise ausgebildet, ein zweites Signal bezüglich einer erfassten magnetischen Flussdichte bereitzustellen. Insbesondere ist vorgesehen, dass das erste Sensorelement und das zweite Sensorelement in einen Schaltkreis integriert sind, der bereits eine Verarbeitung der bereitgestellten Signale ermöglicht, sodass das erste Signal und das zweite Signal aufbereitet weitergegeben werden können.

Eine weitere vorteilhafte Ausgestaltung weist an der Motorwelle einen drehfest angeordneten Magnetring auf, wobei der Magnetring vorzugsweise zwei Pole oder vier Pole aufweist. Insbesondere ist eine alternierende Anordnung der Pole des Magnetrings in Umfangsrichtung vorgesehen. Die Pole sind insbesondere gleichmäßig ausgebildet. Eine unsymmetrische Ausbildung des Magnetrings kann allerdings auch vorgesehen sein, so dass eine einfache Detektion einer vollständigen Umdrehung (360°) gegeben ist. Die Anzahl von Polen ist bevorzugt gerade. Auch wenn insbesondere für einen einfachen Aufbau zwei oder vier Pole vorteilhaft sind, kann insbesondere auch ein Magnetring mit sechs oder acht Polen oder noch mehr Polen vorgesehen werden.

Gemäß einer vorteilhaften Weiterbildung sind das erste Sensorelement und das zweite Sensorelement derart in Bezug auf den zugeordneten Elektromotor ausgerichtet, dass das erste Signal von dem ersten Sensorelement und das zweite Signal von dem zweiten Sensorelement um 90° zueinander verschoben sind, wenn der Magnetring zwei Pole aufweist, um 45° zueinander verschoben sind, wenn der Magnetring vier Pole aufweist, um 30° zueinander verschoben sind, wenn der Magnetring sechs Pole aufweist und um 22,5° zueinander verschoben sind, wenn der Magnetring acht Pole aufweist. Auf diese Weise lässt sich die Messgenauigkeit weiter verbessern.

Weiter vorteilhaft ist vorgesehen, dass die Sensoreinrichtung ein 2D-Hallsensor ist, wobei das erste Sensorelement ein erstes Hallelement des 2D-Hallsensors ist und das zweite Sensorelement ein zweites Hallelement des 2D-Hallsensors ist. Hierdurch lässt sich der Aufbau konstruktiv besonders einfach und kostengünstig realisieren, insbesondere da nur ein Bauteil genutzt wird. Der 2D-Hallsensor kann insbesondere auch als 3D-Hallsensor realisiert sein, bei dem nur zwei der drei Hallelemente, deren dotierte Halbleiterschichten um 90° in Bezug auf die Motorwellenachse versetzt zueinander angeordnet sind, genutzt werden. Insbesondere ist vorgesehen, dass der 2D-Hallsensor teil eines integrierten Schaltkreises ist, wobei der Schaltkreis vorteilhafterweise bereits eine Aufbereitung der von den Hallelementen erfassten Signale ermöglicht. Vorteilhafterweise kann ein rotierendes Magnetfeld durch die unterschiedliche Ausrichtung der Hallelemente radial und tangential gleichzeitig von einem Bauelement, nämlich dem 2D-Hallsensor, erfasst werden. Der Platzbedarf für die Komponente entspricht vorteilhafterweise dem eines einzigen Bauelements und lässt sich insbesondere auf der Platine im Motor anordnen. Das D in 2D beziehungsweise in 3D steht für dimensional, so dass 2D gleichbedeutend mit zweidimensional ist und 3D gleichbedeutend mit dreidimensional ist.

Gemäß einer weiteren besonders vorteilhaften Ausführungsform der Erfindung umfasst die Lenksäule eine Auswerteeinheit, wobei die Auswerteeinheit ausgebildet ist, von dem ersten Sensorelement und dem zweiten Sensorelement bereitgestellte Signale auszuwerten. Insbesondere ist vorgesehen, dass die Auswerteeinheit ausgebildet ist, aus den von dem ersten Sensorelement und dem zweiten Sensorelement bereitgestellten Signalen eine Umdrehung der Motorwelle zu bestimmen. Weiter ist die Auswerteeinheit vorteilhafterweise ausgebildet, aus den von dem ersten Sensorelement und dem zweiten Sensorelement bereitgestellten Signalen eine Drehrichtung der Motorwelle zu bestimmen, insbesondere mittels Quadratursignals. Vorteilhafterweise lässt sich hierdurch eine Ansteuerung des Elektromotors überwachen. Darüber hinaus ist die Auswerteeinheit vorteilhafterweise ausgebildet, die Anzahl der Umdrehungen der Motorwelle zu erfassen. Weiter ist die Auswerteeinheit vorteilhafterweise ausgebildet, die Drehrichtung der Motorwelle mittels Quadratursignals zu bestimmen. Alternativ ist eine Sensoreinrichtung vorgesehen, die ausgebildet ist, direkt ein Richtungssignal auszugeben. Vorteilhafterweise wird dabei die Kombination aus dem ersten und zweiten Sensorelement intern in der Sensoreinrichtung verarbeitet, um direkt ein Richtungssignal auszugeben. Insbesondere kann die Sensoreinrichtung ein 2D-Hallsensor sein, der ausgebildet ist, direkt ein Geschwindigkeitssignal und ein Richtungssignal auszugeben.

Eine weitere vorteilhafte Ausgestaltung sieht einen Signalwandler vor, der ausgebildet ist, die bereitgestellten Signale, insbesondere die von dem ersten Sensorelement bereitgestellten Signale und/oder die von dem zweiten Sensorelement bereitgestellten Signale, vor der Auswertung in diskrete Signale, insbesondere in binär codierte Signale mit Low-Pegel und High-Pegel, umzuwandeln. Vorteilhafterweise wird hierdurch die Weiterverarbeitung der Signale vereinfacht.

Gemäß einer weiteren vorteilhaften Ausgestaltung ist eine Schnittstelle vorgesehen, die ausgebildet ist, die Signale des ersten Sensorelements und des zweiten Sensorelements an die Auswerteeinheit zu übertragen. Insbesondere ist ein 3-wire-Interface oder ein 4-wire-Interface als Schnittstelle vorgesehen. Bei einem 3-wire-Interface ist insbesondere die folgende Belegung vorgesehen: 1: Versorgung und Signal in X-Richtung, 2: Signal in Y-Richtung, 3: Masse. Bei einem 4-wire-Interface ist insbesondere die folgende Belegung vorgesehen: 1: Versorgung, 2: Signal in X-Richtung, 3: Signal in Y-Richtung, 4: Masse. Für die Übertragung der Signale ist insbesondere auch vorgesehen, dass die Lenksäule eine Bus-Schnittstelle aufweist, insbesondere unter Verwendung von SPI (SPI: Serial Peripheral Interface), von SENT (SENT: Single Edge Nibble Transmission), von SPC (SPC: Short PWM Code Frames) oder von I2C (I2C: Inter-Integrated Circuit). Insbesondere ist auch eine gemeinsame Stromversorgung vorgesehen.

Eine weitere vorteilhafte Ausgestaltung sieht vor, dass die Sensoreinrichtung und der Elektromotor in einem gemeinsamen Gehäuse angeordnet sind. Hierdurch lässt sich vorteilhafterweise ein besonders kompakter Aufbau realisieren und Motor und Sensoreinrichtung schützen.

Gemäß einer weiteren besonders vorteilhaften Ausgestaltung der Erfindung umfasst die Lenksäule eine Positionsbestimmungseinrichtung. Die Positionsbestimmungseinrichtung ist vorteilhafterweise ausgebildet ist, eine Position der Stelleinheit bezogen auf die Trageinheit unter Nutzung des ersten Sensorelements und des zweiten Sensorelements zu bestimmen. Vorteilhafterweise ist der Positionsbestimmungseinrichtung dazu die Auswerteeinheit zugeordnet. Insbesondere ist vorgesehen, dass die Auswerteeinheit von der Positionsbestimmungseinrichtung umfasst ist.

Insbesondere ist vorgesehen, dass der Elektromotor als ein erster Elektromotor für eine Längsverstellung der Stelleinheit ausgebildet ist, und die Verstelleinrichtung einen zweiten Elektromotor für eine Höhenverstellung der Stelleinheit umfasst, wobei die Sensoreinrichtung als eine erste Sensoreinrichtung dem ersten Elektromotor zugeordnet ist, und eine zweite Sensoreinrichtung dem zweiten Elektromotor zugeordnet ist. Insbesondere ist vorgesehen, dass die erste Sensoreinrichtung und die zweite Sensoreinrichtung gleich aufgebaut sind. Vorteilhafterweise ermittelte die Positionsbestimmungseinrichtung aus einer Anzahl von erfassten Umdrehungen der Motorwelle und einer erfassten Drehrichtung der Motorwelle die Position der Stelleinrichtung relativ zu der Trageinheit. Vorteilhafterweise lässt sich auf diese Weise bei kompaktem Aufbau eine hohe Messgenauigkeit realisieren, die insbesondere für eine exakte Positionsbestimmung einer an der Lenksäule angeordneten Lenkhandhabe und eine präzise Steuerung von Kraftfahrzeugrückhaltesystemen, wie Airbags, erforderlich ist.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer perspektivischen Darstellung ein Ausführungsbeispiel für eine erfindungsgemäß ausgebildete Lenksäule;
- Fig. 2: in einer weiteren perspektivischen Darstellung das Ausführungsbeispiel gemäß Fig. 1;
- Fig. 3: in einer vereinfachten schematischen Darstellung ein Ausführungsbeispiel für eine Sensoreinheit einer erfindungsgemäß ausgebildeten Lenksäule, die angeordnet ist, um ein sich veränderndes Magnetfeld eines auf einer Motorwelle angeordneten Magnetrings zu erfassen;
- Fig. 4: in einer Draufsicht ein Ausführungsbeispiel für eine Sensoreinheit für eine erfindungsgemäß ausgebildete Lenksäule; und
- Fig. 5: in einer Diagrammdarstellung einen beispielhaften Verlauf von einem von einer Sensoreinheit gemäß Fig. 3 bereitgestellten ersten Signal und zweiten Signal.

In den verschiedenen Figuren sind gleiche Teile in der Regel mit den gleichen Bezugszeichen versehen und werden daher mitunter auch jeweils nur im Zusammenhang mit einer der Figuren erläutert.

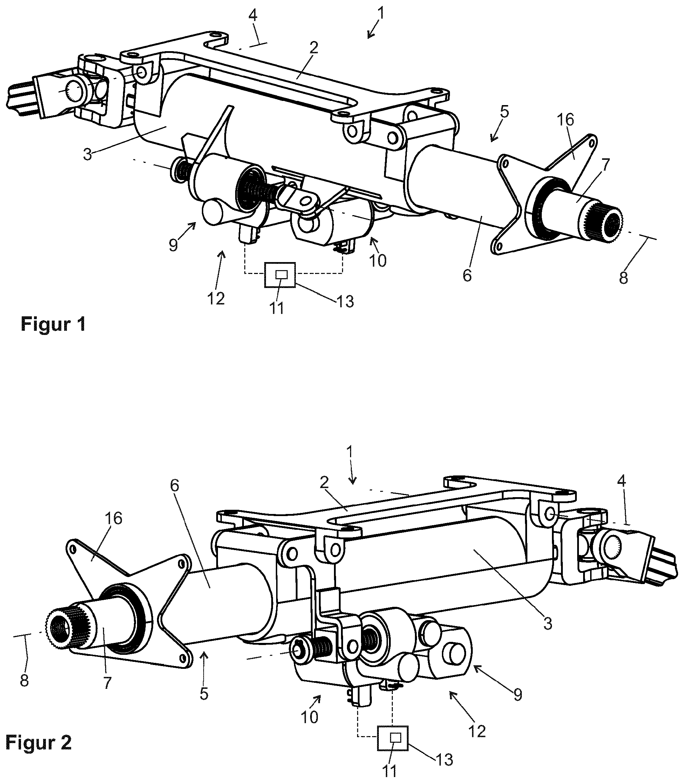

Das in Fig. 1 und Fig. 2 gezeigte Ausführungsbeispiel für eine Lenksäule 1 umfasst eine Trageinheit 2, mit der die Lenksäule 1 an der Karosserie eines Kraftfahrzeugs angeordnet werden kann. Des Weiteren umfasst die Lenksäule eine Stelleinheit 5 mit einem äußeren Mantelrohr 3 und einem inneren Mantelrohr 6, wobei die Stelleinheit 5 an der Trageinheit 2 längs- und höhenverstellbar gehaltert ist. In der Stelleinheit 5 ist zudem eine Lenkwelle 7 um ihre Längsachse 8 drehbar gelagert.

Das innere Mantelrohr 6 der Stelleinheit 5 ist in diesem Ausführungsbeispiel in dem äußeren Mantelrohr 3 entlang der Längsachse 8 der Lenkwelle 7 verschiebbar. An dem hinteren Ende des inneren Mantelrohrs 6 weist das innere Mantelrohr 6 zudem ein Halteelement 16 auf, an dem eine Lenkhandhabe, insbesondere ein Lenkrad, angeordnet werden kann.

Über eine Lenkhandhabe kann ein Fahrer einen Lenkwunsch in eine Drehbewegung der Lenkwelle 7 umsetzen, die dann über das in Fig. 1 und Fig. 2 am vorderen Ende der Lenksäule 1 dargestellte Kardangelenk und weitere Lenkwellenteile in ein in Fig. 1 und Fig. 2 nicht dargestelltes Lenkgetriebe eingebracht wird. Insbesondere kann aber auch ein Steer-by-Wire Lenksystem vorgesehen sein, bei dem keine mechanische Kopplung zwischen der Lenkhandhabe und den lenkbaren Rädern des Kraftfahrzeugs besteht, und bei dem erfasste Lenkbewegungen als Steuerungssignale an einen auf ein Lenkgetriebe wirkenden Lenkungsaktuator übertragen werden.

Für die Längs- und Höhenverstellbarkeit der Lenksäule 1 gegenüber der Trageinheit 2 umfasst die Lenksäule 1 des Weiteren eine Verstelleinrichtung 12, die für die Längsverstellung und die Höhenverstellung in an sich bekannter Weise einen ersten Elektromotor 9 und einen zweiten Elektromotor 10 jeweils mit einem Gewindestangenantrieb, auch als Spindelantrieb bezeichnet, aufweist. Der Gewindestangenantrieb kann dabei insbesondere eine auf dem Abtrieb des jeweiligen Elektromotors 9, 10 angeordnete Schneckenwelle aufweisen, wobei die Schneckenwelle mit einem Schneckenrad in Eingriff steht. Das Schneckenrad ist entweder drehfest mit der Gewindestange (Rotationsspindelantrieb oder auch Drehspindelantrieb genannt) oder drehfest mit einer Spindelmutter (Tauchspindelantrieb genannt) gekoppelt. Durch eine Ansteuerung des ersten Elektromotors 9 erfolgt also eine Längsverstellung der Stelleinheit 5. Durch eine Ansteuerung des zweiten Elektromotors 10 erfolgt eine Höhenverstellung der Stelleinheit 5. Insbesondere ist vorgesehen, dass der erste Elektromotor 9 und der zweite Elektromotor 10 eine gemeinsame Stromversorgung bzw. Spannungsversorgung aufweisen.

Für die Ansteuerung des ersten Elektromotors 9 und des zweiten Elektromotors 10 umfasst die Lenksäule 1 in diesem Ausführungsbeispiel eine Steuereinheit 13, die in Fig. 1 und Fig. 2 nur schematisch dargestellt ist. Die Steuereinheit 13 kann insbesondere über einen Kommunikations-Bus, insbesondere einen CAN-Bus (CAN: Controller Area Network) mit dem ersten Elektromotor 9 und dem zweiten Elektromotor 10 kommunikationstechnisch verbunden sein. Die Steuereinheit 13 kann insbesondere eine entsprechend programmierte Mikrocontrollerschaltung sein. Die Steuereinheit 13 kann aber auch Teil einer zentralen ECU (ECU: Electronic Control Unit) eines Kraftfahrzeugs sein, insbesondere ein Komfortsteuergerät.

Die Steuereinheit 13 umfasst eine Positionsbestimmungseinrichtung 11 mit einer in Fig. 1 und Fig. 2 nicht explizit dargestellten Auswerteeinheit. Die Positionsbestimmungseinrichtung 11 ist ausgebildet, eine Position der Stelleinheit 5 bezogen auf die Trageinheit 2 zu bestimmen. Dazu umfassen die Elektromotoren 9, 10 der Verstelleinrichtung 12 jeweils eine in Fig. 1 und Fig. 2 nicht dargestellte Sensoreinrichtung 20 mit einem ersten Sensorelement 21 und einem zweiten Sensorelement 22. Das erste Sensorelement 21 und das zweite Sensorelement 22 sind jeweils ausgebildet und angeordnet, ein sich beim Rotieren der Motorwelle des jeweiligen Elektromotors 9, 10 veränderndes Magnetfeld zu erfassen, wobei das erste Sensorelement 21 und das zweite Sensorelement 22 unterschiedlich in Bezug auf den Elektromotor 9, 10, dem sie zugeordnet sind, ausgerichtet sind.

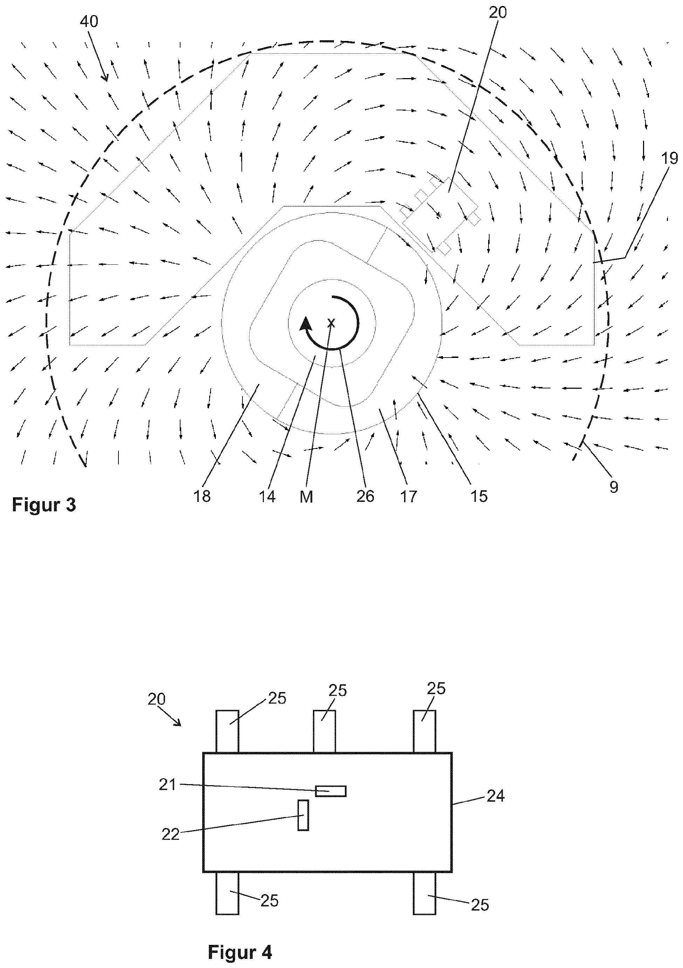

Ein Ausführungsbeispiel für die Sensoreinrichtung 20 sowie eine Positionsbestimmung mittels der Positionsbestimmungseinrichtung 11 unter Nutzung der von der Sensoreinrichtung 20 bereitgestellten Signale 31, 32 wird nachfolgend unter Bezugnahme auf Fig. 3 bis Fig. 5 erläutert.

Fig. 3 zeigt dabei stark vereinfacht eine Frontalansicht des nur schematisch dargestellten ersten Elektromotors 9. Für den zweiten Elektromotor 10 kann die Ausgestaltung identisch sein. Der erste Elektromotor 9 umfasst eine Motorwelle 14 und einen an der Motorwelle 14 drehfest angeordneten Magnetring 15. Der Magnetring 15 weist in diesem Ausführungsbeispiel zwei Pole auf, nämlich einen magnetischen Südpol als ersten Pol 17 und einen magnetischen Nordpol als zweiten Pol 18.

Weiter umfasst der Elektromotor 9 eine Leiterplatte 19, und eine auf der Leiterplatte 19 des Elektromotors 9 angeordnete Sensoreinrichtung 20, die in Fig. 4 detaillierter dargestellt ist. Insbesondere ist vorgesehen, dass der Elektromotor 9 und die Leiterplatte 19 mit der Sensoreinrichtung 20 in einem gemeinsamen Gehäuse angeordnet sind, wobei das Gehäuse gegen äußere Einflüsse, beispielsweise Feuchtigkeit, schützt. Die Sensoreinrichtung 20 ist in diesem Ausführungsbeispiel ein in ein IC (IC: Integrated Circuit) 24 mit mehreren Kontakt-Pins 25 integrierter 2D-Hallsensor und weist als ein erstes Sensorelement 21 ein erstes Hallelement und als zweites Sensorelement 22 ein zweites Hallelement auf. Die Sensoreinrichtung 20 ist dabei ortsfest angeordnet und dreht sich bei einer Drehung der Motorwelle 14 nicht mit. Dadurch, dass die für den Elektromotor 9 bereits vorhandene Leiterplatte 19 mit dem 2D-Hallsensor bestückt ist, wird nahezu kein zusätzlicher Bauraum benötigt.

Die Sensorelemente 21, 22 der Sensoreinrichtung 20 sind dabei so in Bezug auf den Elektromotor 9 angeordnet, dass diese das von dem Magnetring 15 hervorgerufene Magnetfeld 40, welches in Fig. 3 symbolisch durch Pfeile dargestellt ist, erfassen, nämlich jeweils die magnetische Flussdichte an der jeweiligen Anordnungsposition. Dreht sich die Motorwelle 14 um die Motorwellenachse M und somit der daran angeordnete Magnetring 15, so ändert sich auch das von den Sensorelementen 21, 22 erfasste Magnetfeld 40 beziehungsweise die erfasste magnetische Flussdichte. Das erste Sensorelement 21 und das zweite Sensorelement 22 sind dabei unterschiedlich in Bezug auf den Elektromotor 9 ausgerichtet, nämlich so, dass ein von dem ersten Sensorelement 21 erzeugtes erste Signal 31 bezüglich der erfassten magnetischen Flussdichte und ein von dem zweiten Sensorelement 22 erzeugtes zweites Signal 32 bezüglich der erfassten magnetischen Flussdichte um 90° zueinander verschoben sind. Aufgrund von verschiedenen Ungenauigkeiten, beispielsweise in Bezug auf die Ausrichtung der Sensorelemente 21, 22 und/oder einen nicht idealen Rundlauf der Motorwelle 14, kann es bei der Verschiebung der Signale 31, 32 zu gewissen Abweichungen von 90° kommen, insbesondere um Abweichungen von bis zu 10 %.

Das erste Sensorelement 21 und das zweite Sensorelement 22 sind in einer durch das IC 24 beziehungsweise die Leiterplatte 19 gebildeten gemeinsamen Ebene angeordnet, die sich orthogonal zu einer Motorwellenachse M der Motorwelle 14 erstreckt. Die dotierte Halbleiterschicht des jeweiligen Sensorelements 21, 22 ist dabei senkrecht zur Bildebene ausgerichtet, wobei das erste Sensorelement 21 und das zweite Sensorelemente 22 um etwa 90° versetzt zueinander ausgerichtet sind, wie in Fig. 4 gezeigt.

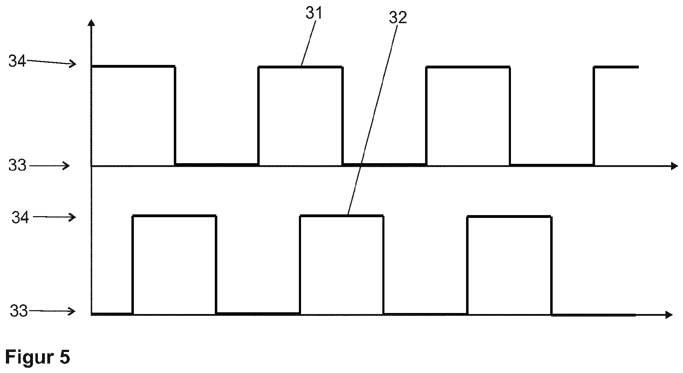

Hieraus resultiert, dass die von dem ersten Sensorelement 21 und dem zweiten Sensorelement 22 erfasste magnetische Flussdichte des rotierenden Magnetrings 15 sich als sinusförmiges Signal darstellt. Diese sinusförmigen Signalverläufe werden dabei in diesem Ausführungsbeispiel von einem von dem IC 24 umfassten Signalwandler, der nicht explizit in den Figuren dargestellt ist, in diskrete Signale 31, 32 umgewandelt. Das so umgewandelte erste Signal 31 und das so umgewandelte zweite Signal 32 wechseln dabei lediglich zwischen Low-Pegel 33 und High-Pegel 34, wie beispielhaft in Fig. 5 dargestellt.

Das umgewandelte erste Signal 31 des ersten Sensorelements 21 und das umgewandelte zweite Signal 32 des zweiten Sensorelements 22 werden dabei der Auswerteeinheit der Positionsbestimmungseinrichtung 11 zugeführt. Die Auswerteinheit bestimmt dabei aus dem ersten Signal 31 und dem zweiten Signal 32 eine Umdrehung der Motorwelle 14, was einer Periode des jeweiligen Signals 31, 32 entspricht. Darüber hinaus bestimmt die Auswerteeinheit unter Berücksichtigung des Signalversatzes die Drehrichtung 26 der Motorwelle 14. Die Positionsbestimmungseinrichtung 11 umfasst dabei einen Zähler, der die Umdrehungen der Motorwelle 14 in die jeweilige Drehrichtung zählt und bevorzugt einen Speicher um den Zähler abzuspeichern und zu einem späteren Zeitpunkt wieder auszulesen. Die Anzahl an Umdrehungen der Motorwelle 24, die bei einem Verstellen der Stelleinheit 5 von einem Anschlag zum anderen Anschlag benötigt wird, ist dabei fix. Daraus bestimmt die Positionsbestimmungseinrichtung 11 dann definiert aus den für den Elektromotor 9 erfassten und ausgewerteten Signalen 31, 32 für die Längsverstellung - für den Elektromotor 10 entsprechend für die Höhenverstellung - die Längsposition der Stelleinheit 5 in Bezug auf die Trageinheit 2.

Aus der Frequenz der Signale 31, 32 bestimmt die Auswerteeinheit vorteilhafterweise zudem die Umdrehungsgeschwindigkeit der Motorwelle 14.

Insofern können die von der Sensoreinrichtung 20 bereitgestellten und von der Auswerteeinheit ausgewerteten Signale insbesondere auch für eine Ansteuerung des ersten Elektromotors 9 beziehungsweise des zweiten Elektromotors 10 der Steuereinheit 13 bereitgestellt werden.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Lenksäule
- 2: Trageinheit
- 3: äußeres Mantelrohr
- 4: Schwenkachse
- 5: Stelleinheit
- 6: inneres Mantelrohr
- 7: Lenkwelle
- 8: Längserstreckungsachse
- 9: erster Elektromotor
- 10: zweiter Elektromotor
- 11: Positionsbestimmungseinrichtung
- 12: Verstelleinrichtung
- 13: Steuereinheit
- 14: Motorwelle
- 15: Magnetring
- 16: Halteelement
- 17: erster Pol
- 18: zweiter Pol
- 19: Leiterplatte
- 20: Sensoreinrichtung
- 21: erstes Sensorelement
- 22: zweites Sensorelement
- 24: integrierter Schaltkreis
- 25: Kontakt-Pin
- 26: Drehrichtung der Motorwelle (14)
- 31: erstes Signal
- 32: zweites Signal
- 33: Low-Pegel
- 34: High-Pegel
- 40: Magnetfeld
- M: Motorwellenachse

## Patentansprüche

1. Lenksäule (1) für ein Kraftfahrzeug umfassend eine Trageinheit (2), eine an der Trageinheit (2) verstellbar gehalterte Stelleinheit (5), eine Verstelleinrichtung (12) mit einem Elektromotor (9, 10), die zum Verstellen der Stelleinheit (5) gegenüber der Trageinheit (2) ausgebildet ist, **dadurch gekennzeichnet, dass** der Elektromotor (9, 10) eine Motorwelle (14) und eine Sensoreinrichtung (20) aufweist, wobei die Sensoreinrichtung ein erstes Sensorelement (21) und ein zweites Sensorelement (22) umfasst, wobei das erste Sensorelement (21) und das zweite Sensorelement (22) jeweils ausgebildet und angeordnet sind, ein sich beim Rotieren der Motorwelle (14) veränderndes Magnetfeld (40) zu erfassen, wobei das erste Sensorelement (21) und das zweite Sensorelement (22) unterschiedlich in Bezug auf den Elektromotor (9, 10) ausgerichtet sind.

2. Lenksäule (1) nach Anspruch 1, **dadurch gekennzeichnet, dass** das erste Sensorelement (21) und das zweite Sensorelement (22) in einer gemeinsamen Ebene angeordnet sind.

3. Lenksäule (1) nach Anspruch 2, **dadurch gekennzeichnet, dass** die Motorwelle (14) sich entlang einer Motorwellenachse (M) erstreckt, wobei die Ebene senkrecht zu der Motorwellenachse (M) ist.

4. Lenksäule (1) nach einem der vorstehenden Ansprüche, **dadurch gekennzeichnet, dass** das erste Sensorelement (21) und das zweite Sensorelement (22) um 90° versetzt zueinander ausgerichtet sind.

5. Lenksäule (1) nach einem der vorstehenden Ansprüche, **dadurch gekennzeichnet, dass** das erste Sensorelement (21) weiter ausgebildet ist, ein erstes Signal (31) bezüglich einer erfassten magnetischen Flussdichte bereitzustellen, und das zweite Sensorelement (22) weiter ausgebildet ist, ein zweites Signal (32) bezüglich einer erfassten magnetischen Flussdichte bereitzustellen.

6. Lenksäule (1) nach einem der vorstehenden Ansprüche, **dadurch gekennzeichnet, dass** an der Motorwelle (14) ein Magnetring (15) drehfest angeordnet ist, wobei der Magnetring (15) zwei Pole (17, 18) oder vier Pole aufweist.

7. Lenksäule (1) nach Anspruch 5 und Anspruch 6, **dadurch gekennzeichnet, dass** das erste Sensorelement (21) und das zweite Sensorelement (22) derart in Bezug auf den Elektromotor (9, 10) ausgerichtet sind, dass das erste Signal (31) und das zweite Signal (32) um 90° zueinander verschoben sind, wenn der Magnetring (15) zwei Pole (17, 18) aufweist, und um 45° zueinander verschoben sind, wenn der Magnetring (15) vier Pole aufweist.

8. Lenksäule (1) nach einem der vorstehenden Ansprüche, **dadurch gekennzeichnet, dass** die Sensoreinrichtung (20) ein 2D-Hallsensor ist, wobei das erste Sensorelement (21) ein erstes Hallelement des 2D-Hallsensors ist und das zweite Sensorelement (22) ein zweites Hallelement des 2D-Hallsensors ist.

9. Lenksäule (1) nach einem der vorstehenden Ansprüche, **gekennzeichnet durch** eine Auswerteeinheit, die ausgebildet ist, aus den von dem ersten Sensorelement (21) und dem zweiten Sensorelement (22) bereitgestellten Signalen (31, 32) eine Umdrehung der Motorwelle (14) und eine Drehrichtung (26) der Motorwelle (14) zu bestimmen.

10. Lenksäule (1) nach Anspruch 9, **dadurch gekennzeichnet, dass** die Auswerteeinheit weiter ausgebildet ist, die Drehrichtung der Motorwelle (14) mittels Quadratursignals zu bestimmen.

11. Lenksäule (1) nach Anspruch 9 oder Anspruch 10, **gekennzeichnet durch** einen Signalwandler, der ausgebildet ist, die bereitgestellten Signale vor der Auswertung in binär codierte Signale mit Low-Pegel (33) und High-Pegel (34) umzuwandeln.

12. Lenksäule (1) nach einem der Ansprüche 9 bis 11, **gekennzeichnet durch** ein 3-wire-Interface oder ein 4-wire-Interface, das ausgebildet ist, die Signale (31, 32) des ersten Sensorelements (21) und des zweiten Sensorelements (22) an die Auswerteeinheit zu übertragen.

13. Lenksäule nach einem der vorstehenden Ansprüche, **dadurch gekennzeichnet, dass** die Sensoreinrichtung und der Elektromotor in einem gemeinsamen Gehäuse angeordnet sind.

14. Lenksäule (1) nach einem der vorstehenden Ansprüche, **gekennzeichnet durch** eine Positionsbestimmungseinrichtung (11), die ausgebildet ist, eine Position der Stelleinheit (5) bezogen auf die Trageinheit (2) unter Nutzung des ersten Sensorelements (21) und des zweiten Sensorelements (22) zu bestimmen.

15. Lenksäule (1) nach einem der vorstehenden Ansprüche, **dadurch gekennzeichnet, dass** der Elektromotor (9) als ein erster Elektromotor für eine Längsverstellung der Stelleinheit (5) ausgebildet ist, und die Verstelleinrichtung (12) einen zweiten Elektromotor (10) für eine Höhenverstellung der Stelleinheit (5) umfasst, wobei die Sensoreinrichtung (20) als eine erste Sensoreinrichtung dem ersten Elektromotor (9) zugeordnet ist, und eine zweite Sensoreinrichtung dem zweiten Elektromotor (10) zugeordnet ist.

## Claims

1. Steering column (1) for a motor vehicle, comprising a support unit (2), an adjusting unit (5) adjustably mounted on the support unit (2), an adjusting device (12) with an electric motor (9, 10), which is designed to adjust the adjusting unit (5) relative to the support unit (2), **characterized in that** the electric motor (9, 10) has a motor shaft (14) and a sensor device (20), wherein the sensor device comprises a first sensor element (21) and a second sensor element (22), wherein the first sensor element (21) and the second sensor element (22) are each designed and arranged to detect a magnetic field (40) which changes when the motor shaft (14) rotates, wherein the first sensor element (21) and the second sensor element (22) are aligned differently in relation to the electric motor (9, 10).

2. Steering column (1) according to claim 1, **characterized in that** the first sensor element (21) and the second sensor element (22) are arranged in a common plane.

3. Steering column (1) according to claim 2, **characterized in that** the motor shaft (14) extends along a motor shaft axis (M), the plane being perpendicular to the motor shaft axis (M).

4. Steering column (1) according to one of the preceding claims, **characterized in that** the first sensor element (21) and the second sensor element (22) are aligned offset by 90° relative to one another.

5. Steering column (1) according to one of the preceding claims, **characterized in that** the first sensor element (21) is further designed to provide a first signal (31) relating to a detected magnetic flux density, and the second sensor element (22) is further designed to provide a second signal (32) relating to a detected magnetic flux density.

6. Steering column (1) according to one of the preceding claims, **characterized in that** a magnetic ring (15) is arranged non-rotatably on the motor shaft (14), the magnetic ring (15) having two poles (17, 18) or four poles.

7. Steering column (1) according to claim 5 and claim 6, **characterized in that** the first sensor element (21) and the second sensor element (22) are aligned with respect to the electric motor (9, 10) in such a way that the first signal (31) and the second signal (32) are displaced by 90° with respect to each other when the magnetic ring (15) has two poles (17, 18), and are displaced by 45° with respect to each other when the magnetic ring (15) has four poles.

8. Steering column (1) according to one of the preceding claims, **characterized in that** the sensor device (20) is a 2D Hall sensor, wherein the first sensor element (21) is a first Hall element of the 2D Hall sensor and the second sensor element (22) is a second Hall element of the 2D Hall sensor.

9. Steering column (1) according to one of the preceding claims, **characterized by** an evaluation unit which is designed to determine a rotation of the motor shaft (14) and a direction of rotation (26) of the motor shaft (14) from the signals (31, 32) provided by the first sensor element (21) and the second sensor element (22).

10. Steering column (1) according to claim 9, **characterized in that** the evaluation unit is further designed to determine the direction of rotation of the motor shaft (14) by means of a quadrature signal.

11. Steering column (1) according to claim 9 or claim 10, **characterized by** a signal converter which is designed to convert the signals provided into binary-coded signals with low level (33) and high level (34) before evaluation.

12. Steering column (1) according to one of claims 9 to 11, **characterized by** a 3-wire interface or a 4-wire interface, which is designed to transmit the signals (31, 32) of the first sensor element (21) and the second sensor element (22) to the evaluation unit.

13. Steering column according to one of the preceding claims, **characterized in that** the sensor device and the electric motor are arranged in a common housing.

14. Steering column (1) according to one of the preceding claims, **characterized by** a position determining device (11) which is designed to determine a position of the adjusting unit (5) relative to the support unit (2) using the first sensor element (21) and the second sensor element (22).

15. Steering column (1) according to one of the preceding claims, **characterized in that** the electric motor (9) is designed as a first electric motor for a longitudinal adjustment of the adjusting unit (5), and the adjusting device (12) comprises a second electric motor (10) for a height adjustment of the adjusting unit (5), the sensor device (20) being assigned to the first electric motor (9) as a first sensor device, and a second sensor device being assigned to the second electric motor (10).

## Revendications

1. Colonne de direction (1) pour un véhicule automobile comprenant une unité de support (2), une unité de réglage (5) maintenue de manière réglable sur l'unité de support (2), un dispositif de réglage (12) avec un moteur électrique (9, 10), qui est conçu pour régler l'unité de réglage (5) par rapport à l'unité de support (2), **caractérisée en ce que** le moteur électrique (9, 10) présente un arbre moteur (14) et un dispositif de détection (20), le dispositif de détection comprenant un premier élément de détection (21) et un deuxième élément de détection (22), le premier élément de détection (21) et le deuxième élément de détection (22) étant respectivement conçus et disposés pour détecter un champ magnétique (40) variant lors de la rotation de l'arbre moteur (14), le premier élément de détection (21) et le deuxième élément de détection (22) étant orientés différemment par rapport au moteur électrique (9, 10).

2. Colonne de direction (1) selon la revendication 1, **caractérisée en ce que** le premier élément de détection (21) et le deuxième élément de détection (22) sont disposés dans un plan commun.

3. Colonne de direction (1) selon la revendication 2, **caractérisée en ce que** l'arbre moteur (14) s'étend le long d'un axe de l'arbre moteur (M), le plan étant perpendiculaire à l'axe de l'arbre moteur (M).

4. Colonne de direction (1) selon l'une des revendications précédentes, **caractérisée en ce que** le premier élément de détection (21) et le deuxième élément de détection (22) sont orientés de manière décalée de 90° l'un par rapport à l'autre.

5. Colonne de direction (1) selon l'une quelconque des revendications précédentes, **caractérisée en ce que** le premier élément de détection (21) est en outre configuré pour fournir un premier signal (31) relatif à une densité de flux magnétique détectée, et le deuxième élément de détection (22) est en outre configuré pour fournir un deuxième signal (32) relatif à une densité de flux magnétique détectée.

6. Colonne de direction (1) selon l'une des revendications précédentes, **caractérisée en ce qu'**une bague magnétique (15) est disposée solidairement en rotation sur l'arbre moteur (14), la bague magnétique (15) présentant deux pôles (17, 18) ou quatre pôles.

7. Colonne de direction (1) selon la revendication 5 et la revendication 6, **caractérisée en ce que** le premier élément de détection (21) et le deuxième élément de détection (22) sont orientés par rapport au moteur électrique (9, 10) de telle sorte que le premier signal (31) et le deuxième signal (32) sont décalés de 90° l'un par rapport à l'autre lorsque la bague magnétique (15) comporte deux pôles (17, 18), et sont décalés de 45° l'un par rapport à l'autre lorsque la bague magnétique (15) comporte quatre pôles.

8. Colonne de direction (1) selon l'une des revendications précédentes, **caractérisée en ce que** le dispositif de détection (20) est un capteur à effet Hall 2D, le premier élément de détection (21) étant un premier élément à effet Hall du capteur à effet Hall 2D et le deuxième élément de détection (22) étant un deuxième élément à effet Hall du capteur à effet Hall 2D.

9. Colonne de direction (1) selon l'une des revendications précédentes, **caractérisée par** une unité d'évaluation qui est conçue pour déterminer une rotation de l'arbre moteur (14) et un sens de rotation (26) de l'arbre moteur (14) à partir des signaux (31, 32) fournis par le premier élément de détection (21) et le deuxième élément de détection (22).

10. Colonne de direction (1) selon la revendication 9, **caractérisée en ce que** l'unité d'évaluation est en outre conçue pour déterminer le sens de rotation de l'arbre moteur (14) au moyen d'un signal en quadrature.

11. Colonne de direction (1) selon la revendication 9 ou la revendication 10, **caractérisée par** un convertisseur de signaux qui est conçu pour convertir les signaux mis à disposition en signaux codés en binaire avec un niveau bas (33) et un niveau haut (34) avant l'évaluation.

12. Colonne de direction (1) selon l'une des revendications 9 à 11, **caractérisée par** une interface à 3 fils ou une interface à 4 fils qui est configurée pour transmettre les signaux (31, 32) du premier élément de détection (21) et du deuxième élément de détection (22) à l'unité d'évaluation.

13. Colonne de direction selon l'une des revendications précédentes, **caractérisée en ce que** le dispositif de détection et le moteur électrique sont disposés dans un boîtier commun.

14. Colonne de direction (1) selon l'une des revendications précédentes, **caractérisée par** un dispositif de détermination de position (11) qui est conçu pour déterminer une position de l'unité de réglage (5) par rapport à l'unité de support (2) en utilisant le premier élément de détection (21) et le deuxième élément de détection (22).

15. Colonne de direction (1) selon l'une des revendications précédentes, **caractérisée en ce que** le moteur électrique (9) est conçu comme un premier moteur électrique pour un réglage longitudinal de l'unité de réglage (5), et le dispositif de réglage (12) comprend un deuxième moteur électrique (10) pour un réglage en hauteur de l'unité de réglage (5), le dispositif de détection (20) étant associé comme un premier dispositif de détection au premier moteur électrique (9), et un deuxième dispositif de détection étant associé au deuxième moteur électrique (10).
